# EUROPEAN PATENT APPLICATION

(11) **EP 4 844 208 A1**
(43) Date of publication of application: **25.11.2026**
(21) Application number: 26179006.7
(22) Date of filing: 15.05.2026
(51) Int. Cl.: F02C 6/08, F02C 9/18

(54) **BLEED POSITIONAL DISCREPANCY DETECTION AND ANNUNCIATION LOGIC**

(30) Priority: 20.05.2025 US 202519213670
(71) Applicant: Pratt & Whitney Canada Corp., Longueuil, Québec J4G 1A1 (CA)
(72) Inventor: PERERA, Ryan, (01BE5) Longueuil, J4G 1A1 (CA); MILITELLO, Ariana, (01BE5) Longueuil, J4G 1A1 (CA); AHMAD, Zubair, (01BE5) Longueuil, J4G 1A1 (CA); MICHALAGAS, Dean-Andrew, (01BE5) Longueuil, J4G 1A1 (CA)
(74) Representative: Dehns

(57) **Abstract**

A system comprises a bleed off valve associated with an engine. A controller is connected to the bleed off valve where it is configured to determine if the engine is operating in a steady state condition or a transient condition. If the engine is operating in the transient condition, the controller determines whether the bleed off valve is malfunctioning based on a first plurality of models. If the engine is operating in the steady state condition, the controller determines whether the bleed off valve is malfunctioning based on a second plurality of models and responds to a determination that the bleed off valve is malfunctioning.

## Description

### TECHNICAL FIELD

This disclosure relates generally to a bleed-off valves. More specifically, this disclosure relates to logic for the detection of failures within bleed-off valves.

### BACKGROUND

A bleed-off valve is a valve used to remove excess pressure fluid or air from a system such as an aircraft engine. In rare instances, when the bleed-off valve does not open as commanded, engine surging is likely to occur at low power due to the significant loss of surge margin. This can result in the loss of thrust and/or engine damage. In the event where the bleed-off valve does not close when commanded, excessive bleed at high power can result in overtemp or an inability to reach power. This can also result in engine damage. Engine surging is mitigated by using bleed-off valves which are preprogrammed to open/close by pneumatic, hydraulic, electrical or mechanical means. Some bleed off valve assemblies do not have positional feedback due to increased complexity and costs. Even in systems that do include positional feedback, the ability to perform a backup check on the feedback from the bleed off valve would be beneficial.

### SUMMARY

This disclosure relates to control logic for determining a malfunction of a bleed off valve.

In some examples, the system includes a bleed off valve associated with an engine, a controller connected to the bleed off valve, the controller configured to determine if the engine is operating in a steady state condition or a transient condition, if the engine is operating in the transient condition, determine whether the bleed off valve is malfunctioning based on a first plurality of models, if the engine is operating in the steady state condition, determine whether the bleed off valve is malfunctioning based on a second plurality of models, and respond to a determination that the bleed off valve is malfunctioning.

Any single one or any combination of the following features may be used with the examples above. The system where if the engine is operating in the transient condition the controller is further configured to determine a maneuver type being performed by the engine, select a model of the first plurality of models for analyzing the bleed off valve responsive to the determined maneuver type being performed by the engine, and determine whether the bleed off valve is malfunctioning based on the selected model of the first plurality of models. If the engine is operating in the transient condition the controller is further configured to determine a first maneuver type is being performed by the engine, monitor a pressure derivative of the engine performing the maneuver type, compare the monitored pressure derivative to historical data from a look-up table, and determine whether the bleed off valve is malfunctioning based on the comparison between the monitored pressure derivative and the historical data. If the engine is operating in the transient condition the controller is further configured to determine a maneuver type being performed by the engine, select a hybrid method for analyzing the bleed off valve responsive to the determined maneuver type being performed by the engine, the hybrid method including at least a first model and a second model of the first plurality of models, and determine whether the bleed off valve is malfunctioning based on the selected hybrid method. If the engine is operating in the transient condition the controller is further configured to determine a maneuver type being performed by the engine, select a hybrid method for analyzing the bleed off valve responsive to the determined maneuver type being performed by the engine, the hybrid method including at least a first model and a second model of the first plurality of models, monitor a pressure derivative of the engine performing the maneuver type, compare the monitored pressure derivative to a first group of historical data from a look-up table, compare the monitored pressure derivative to the first group of historical data from the look-up table, generate a first determination of whether the bleed off valve is malfunctioning based on a comparison between the monitored pressure derivative and the first group of historical data, generate a second determination of whether the bleed off valve is malfunctioning based on the comparison between a monitored pressure versus time curve and a second group of historical data, and determine whether the bleed off valve is malfunctioning based on the first determination and the second determination. If the engine is operating in the transient condition the controller is further configured to perform a confidence vote to determine an accuracy of the first determination and the second determination to determine whether the bleed off valve is malfunctioning. If the engine is operating in the steady state condition the controller is further configured to select a hybrid method for analyzing the bleed off valve, the hybrid method including at least a first model and a second model of the second plurality of models, and determine whether the bleed off valve is malfunctioning based on the selected hybrid method to generate a first determination responsive thereto, select a third model of the second plurality of models for analyzing the bleed off valve, determine whether the bleed off valve is malfunctioning based on the selected third model of the second plurality of models to generate a second determination responsive thereto, and determine whether the bleed off valve is malfunctioning based on the first determination and the second determination. If the engine is operating in the steady state condition the controller is further configured to perform a confidence vote to determine an accuracy of the first determination and the second determination to determine whether the bleed off valve is malfunctioning. If the engine is operating in the steady state condition the controller is further configured to generate the second determination of whether the bleed off valve is malfunctioning based on a comparison between time traces of when the bleed off valve changes state and a first group of historical data of engine speed. The step of determining if the engine is in the steady state condition further may include selecting a hybrid method for analyzing the bleed off valve, the hybrid method including at least a first model and a second model of the second plurality of models, and determining whether the bleed off valve is malfunctioning based on the selected hybrid method to generate a first determination responsive thereto, selecting a third model of the second plurality of models for analyzing the bleed off valve, determining whether the bleed off valve is malfunctioning based on the selected third model of the second plurality of models to generate a second determination responsive thereto, and determining whether the bleed off valve is malfunctioning based on the first determination and the second determination. The method may include performing a confidence vote to determine an accuracy of the first determination and the second determination to determine whether the bleed off valve is malfunctioning. Determining whether the bleed off valve is malfunctioning based on the selected third model of the second plurality of models further may include generating the second determination of whether the bleed off valve is malfunctioning based on a comparison between engine shaft speed versus time traces of when the bleed off valve changes state and a first group of historical data of engine speed versus time traces.

In other examples, the method includes determining if an engine is operating in a steady state condition or a transient condition using a controller associated with a bleed off valve, if the engine is operating in the transient condition, determining whether the bleed off valve is malfunctioning based on a first plurality of models, if the engine is operating in the steady state condition, determining whether the bleed off valve is malfunctioning based on a second plurality of models, and responding to a determination that the bleed off valve is malfunctioning.

Any single one or any combination of the following features may be used with the examples above. The method wherein the step of determining if the engine is in the transient condition further may include determining a maneuver type being performed by the engine, selecting a model of the first plurality of models for analyzing the bleed off valve responsive to the determined maneuver type being performed by the engine, and determining whether the bleed off valve is malfunctioning based on the selected model of the first plurality of models. The step of determining if the engine is in the transient condition further may include determining a first maneuver type is being performed by the engine, monitoring a pressure derivative of the engine performing the maneuver type, comparing the monitored pressure derivative to historical data from a look-up table, and determining whether the bleed off valve is malfunctioning based on the comparison between the monitored pressure derivative and the historical data. The step of determining if the engine is in the transient condition further may include determining a maneuver type being performed by the engine, selecting a hybrid method for analyzing the bleed off valve responsive to the determined maneuver type being performed by the engine, the hybrid method including at least a first model and a second model of the first plurality of models, and determining whether the bleed off valve is malfunctioning based on the selected hybrid method. The step of determining if the engine is in the transient condition further may include determining a maneuver type being performed by the engine, selecting a hybrid method for analyzing the bleed off valve responsive to the determined maneuver type being performed by the engine, the hybrid method including at least a first model and a second model of the first plurality of models, monitoring a pressure derivative of the engine performing the maneuver type, comparing the monitored pressure derivative to a first group of historical data from a look-up table, generating a first determination of whether the bleed off valve is malfunctioning based on a comparison between the monitored pressure derivative and the first group of historical data, generating a second determination of whether the bleed off valve is malfunctioning based on the comparison between the monitored pressure versus engine shaft speed curve and a second group of historical data, and determining whether the bleed off valve is malfunctioning based on the first determination and the second determination. The method may include performing a confidence vote to determine an accuracy of the first determination and the second determination to determine whether the bleed off valve is malfunctioning.

In still other examples, the system also includes a bleed off valve associated with an engine, a controller connected to the bleed off valve, the controller configured to determine if the engine is operating in a steady state condition or a transient condition, if the engine is operating in the transient condition determine a maneuver type being performed by the engine, select a hybrid method for analyzing the bleed off valve responsive to a first determined maneuver type being performed by the engine, the hybrid method including at least a first model and a second model of a plurality of models, determine whether the bleed off valve is malfunctioning based on selected hybrid method, determine a second maneuver type is being performed by the engine, monitor a pressure versus engine shaft speed of the engine performing the second maneuver type, compare the monitored pressure versus engine shaft speed curve to historical data from a look-up table and determine whether the bleed off valve is malfunctioning based on the comparison between the monitored pressure versus engine shaft speed curve and the historical data. determine whether the bleed off valve is malfunctioning. The system also includes if the engine is operating in the steady state condition, select the hybrid method for analyzing the bleed off valve, the hybrid method including at least the first model and the second model of the plurality of models, determine whether the bleed off valve is malfunctioning based on the selected hybrid method to generate a first determination responsive thereto, select a third model of the plurality of models for analyzing the bleed off valve, determine whether the bleed off valve is malfunctioning based on the selected third model of the plurality of models to generate a second determination responsive thereto and determine whether the bleed off valve is malfunctioning based on the first determination and the second determination. The system also includes respond to a determination that the bleed off valve is malfunctioning.

Any single one or any combination of the following features may be used with the examples above. The system where if the engine is operating in the steady state condition the controller is further configured to perform a confidence vote to determine an accuracy of the first determination and the second determination to determine whether the bleed off valve is malfunctioning.

Other technical features may be readily apparent to one skilled in the art from the following figures, descriptions, and claims.

### BRIEF DESCRIPTION OF THE DRAWINGS

For a more complete understanding of this disclosure and its advantages, reference is now made to the following description taken in conjunction with the accompanying drawings, in which like reference numerals represent like parts
FIGURE 1 illustrates one example of an environment of operation of a bleed off valve;
FIGURE 2 illustrates a flow diagram of the control logic for confirming the operation of a bleed off valve;
FIGURE 3 illustrates a flow diagram of a hybrid detection method used within the control logic of FIGURE 2;
FIGURE 4 illustrates a comparison of the engine pressure versus engine shaft speed for when a bleed off valve opens and when the bleed off valve closes;
FIGURE 5 illustrates a derivative of the readings of FIGURE 4;
FIGURE 6 illustrates various confidence thresholds associated with the PDot threshold confidence for determining whether a bleed off valve is open or closed;
FIGURE 7 illustrates the Pressure vs. N*model for determining whether a bleed off valve is open or closed;
FIGURE 8 illustrates Pressure vs. N*model confidence vote;
FIGURE 9 illustrates N*response to bleed off valve position change at low power; and
FIGURE 10 illustrates N*response to bleed off valve position change at high power.

### DETAILED DESCRIPTION

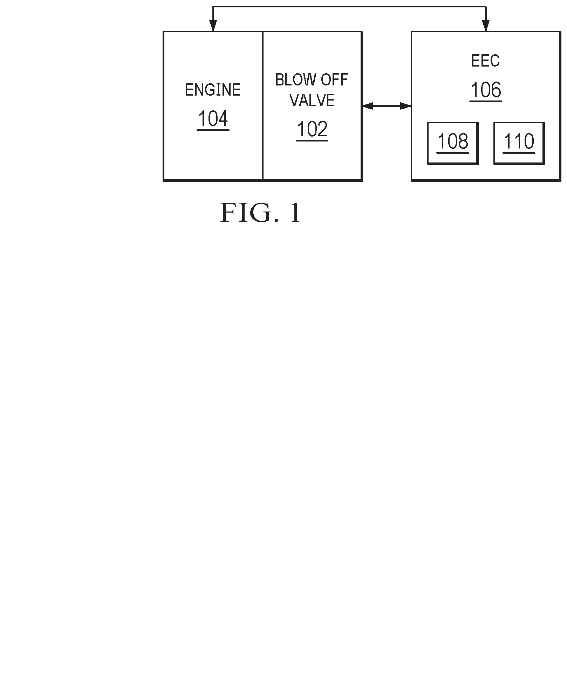

FIGURES 1 through 10, described below, and the various embodiments used to describe the principles of the present disclosure are by way of illustration only and should not be construed in any way to limit the scope of this disclosure. Those skilled in the art will understand that the principles of the present disclosure may be implemented in any type of suitably arranged device or system.

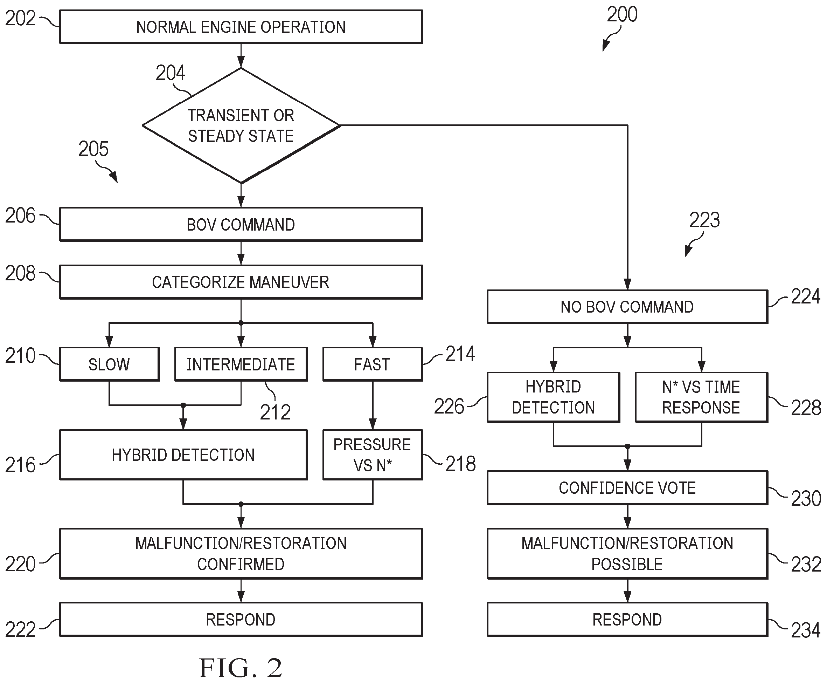

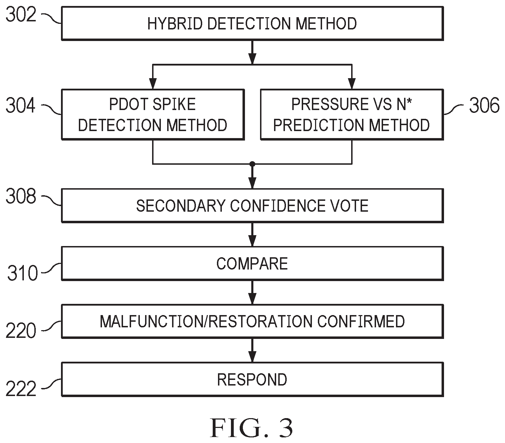

FIGURE 1 illustrates one example of an environment of operation of a bleed off valve (BOV) 102. The BOV 102 is associated with, for example, an aircraft engine 104 in order to bleed off excess air from the compressor. The BOV 102 is monitored and controlled by the electronic engine controller 106 (EEC). By configuring the EEC 106 or other engine controller to detect BOV 102 positional malfunctions based upon real-time engine pressure derivatives, historical injured pressure curves and speed parameter inflections, determinations may be made of malfunctions of a BOV 102 within both self-monitoring and non-self-monitoring BOV devices. The control logic 108 and tables 110 of historical data implemented within the EEC 106 or other engine controller is more fully described herein below with respect to FIGURES 2 and 3.

Although FIGURE 1 illustrates one example of an environment of operation of a bleed off valve (BOV) 102, various changes may be made to FIGURE 1. For example, various components and functions in FIGURE 1 may be combined, further subdivided, replicated, rearranged, or omitted according to particular needs. Also, one or more additional components and functions may be included if needed or desired.

FIGURE 2 illustrates a flow diagram of the control logic 108 for confirming the operation of a bleed off valve 102. The process 200 begins with the aircraft engine 104 operating in a normal mode of operation at 202. Inquiry step 204 determines whether the aircraft engine 104 is operating in a transient condition or a steady state condition. The transient condition is characterized by engine acceleration or deceleration which is typically where the BOVs 102 are commanded by the EEC 106 to open or close. If inquiry step 204 determines that the engine 104 is operating in the transient condition flow moves along path 205 and upon receipt of a BOV command at step 206, a categorization of a maneuver currently being executed by the aircraft engine 104 is determined at step 208. As the engine 104 accelerates or decelerates, the rate of change of the engine speed is recorded by the EEC 106 and may be used as a basis for categorization of the maneuver being carried out in the transient condition. The transient maneuvers are categorized as either a slow maneuver 210, intermediate maneuver 212 or a fast maneuver 214. Based upon the classification of the transient maneuver, differing detection methods for a BOV 102 malfunction are used.

For a slow maneuver 210 or an intermediate maneuver 212, a hybrid detection method 226 is used for detecting BOV malfunctions. Referring now also to FIGURE 3, there is more fully illustrated a flow diagram of the hybrid detection method 226. The hybrid detection method 302 detects BOV 102 malfunctions for slow maneuvers 210 and intermediate maneuvers 212 which are described by a prescribed N*Dot (engine spool speed) range. An intermediate maneuver 212 is one that possesses a larger N*Dot than a slow maneuver but a lower N*Dot than a fast maneuver 214 such as part power acceleration or deceleration. Initiation of the hybrid detection method 302 responsive to a determination of an intermediate maneuver 212 or slow maneuver 210 within an engine 104 in a transient mode of operation involves the performance of two separate testing methods.

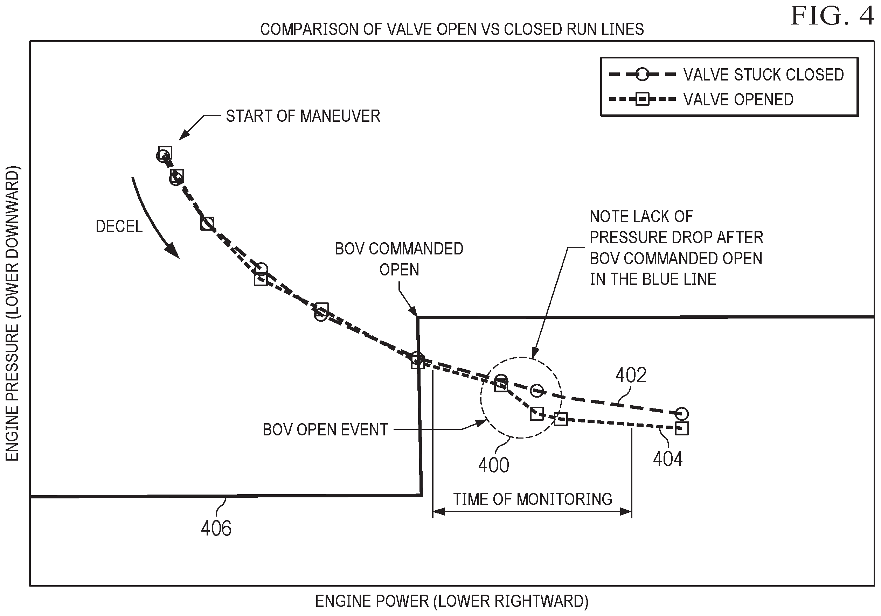

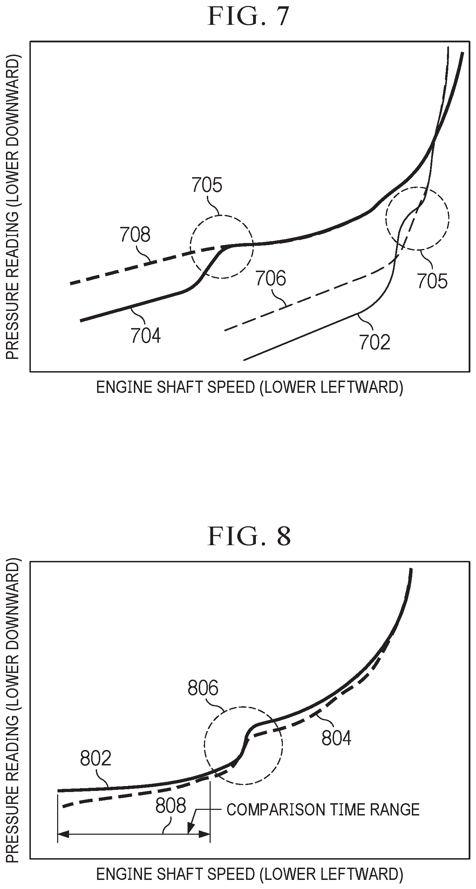

The first testing method involves the PDot spike detection method 304 as will be more fully described with respect to FIGURES 4-5. The second testing method involves the Pressure vs. N*prediction model 306 as will be more fully described with respect to FIGURE 7. Each of these testing methods are used for determining a BOV 102 malfunction. Each of the testing methods includes a built-in confidence vote that will be multiplied by an accuracy factor out of 100% to determine the accuracy of the detection. This factor will be assigned based on historical accuracy of each method where the higher factor indicates a more accurate method. Finally, the confidence vote values of each prediction method 304 and 306 are added together at 308 to form a secondary confidence vote. The final value of the secondary confidence vote is compared at step 310 to predetermined accuracy thresholds. The higher the secondary value of confidence, the more likely the BOV 102 malfunction will be confirmed.

The confidence voting associated with each of the prediction models 304 and 306 allows for faster detection. For example, if the PDot spike is very noticeable during execution of the PDot spike detection method 304, it is not necessary to wait for the Pressure vs. N*prediction model 306 to be executed. Conversely, if PDot spike is not significant during execution of the PDot spike detection method 304, waiting for the Pressure vs. N*prediction model 306 to be executed to confirm will improve accuracy and reduce false positives.

Once the hybrid detection process 216 has been performed as discussed in FIGURE 3, any detected BOV 102 malfunction or restoration is confirmed at step 220 and the malfunction or restoration is responded to at step 222 by setting the appropriate flags or dispatching instructions to address the BOV malfunction.

If step 208 determines that a fast maneuver 214 is taking place, the Pressure vs. N*model 218 is used to check for BOV 102 malfunctions. The operation of the Pressure vs. N*model 218 will be more fully discussed with respect to FIGURES 7 and 8. When analyzing the compressor pressures, it is also important to consider whether the nacelle anti-ice or ECS bleed functions are commanded or in use as these will affect the detected compressor pressure.

If inquiry step 204 determines that the engine is operating in the steady-state configuration, control passes to step 224. The steady-state condition is characterized by no engine acceleration or deceleration (the engine is sitting at idle or high-power). Typically, no BOVs 102 are commanded at step 224 by the EEC 106 to open or close. Even if the BOVs 102 are not typically commanded in the steady-state condition, the position of the BOV 102 can change if the supply of downstream air is suddenly applied/unapplied following a BOV controller hardware malfunction that occurs during a transient maneuver or any other intermittent event. The BOV malfunction detection logic for steady-state condition is invoked once the behavior of the engine meets the following conditions:
1. The rate of change of engine spool speed (N*Dot) is constant.
2. No fuel flow or TLA changes are commanded.
3. No acceleration/deceleration flag is set.
4. N*Reference (N* Ref) has not changed.
5. The ambient pressure is constant.

The above-mentioned criteria are not exhaustive and may include other indicators of steady-state behavior for the aircraft engine 104.

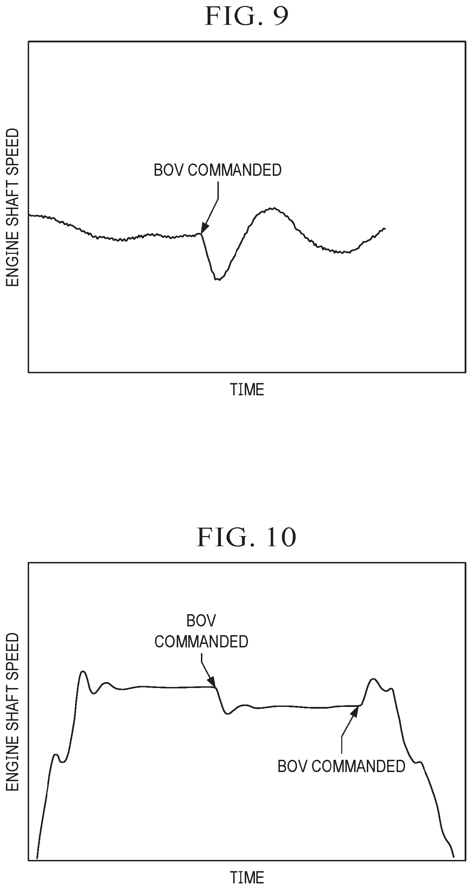

While in steady state, the BOV 102 malfunction detection logic uses a combination of the hybrid detection method 226 and the N* vs. Time Response Model 228 detection comparison. The hybrid detection method 226 was described previously with respect to FIGURE 3. The N* vs. Time Response Model 228 will be more fully described with respect to FIGURES 9 and 10. The combination of the hybrid detection method 226 and the N* vs. Time Response Model 228 is required since other factors besides BOV 102 positional changes invoke a pressure and engine speed response. Each of the hybrid detection method 226 and the N* vs. Time Response Model 228 employ its own confidence vote that would be utilized in a final confidence vote 237 to confirm a BOV 102 malfunction. This final confidence vote 308 is more particularly illustrated in FIGURE 3. After the confidence vote 308, a determination of whether a BOV 102 malfunction/restoration is possible at step 232 and the system will respond to the indication at step 234. Responses to confirmation of a BOV malfunction/restoration may involve setting a bit and/or fault code and then communicating the status. Additionally, a time-limited dispatch (TLD) can be set as an indication to perform a maintenance action on the BOV 102 hardware.

Although FIGURE 2 illustrates one example of a flow diagram of the control logic 108 for confirming the operation of a bleed off valve 102, various changes may be made to FIGURE 2. For example, while shown as a series of steps, various steps in FIGURE 2 could overlap, occur in parallel, occur in a different order, or occur any number of times (including zero times).

Although FIGURE 3 illustrates one example of a flow diagram of the hybrid detection method 226, various changes may be made to FIGURE 3. For example, while shown as a series of steps, various steps in FIGURE 3 could overlap, occur in parallel, occur in a different order, or occur any number of times (including zero times).

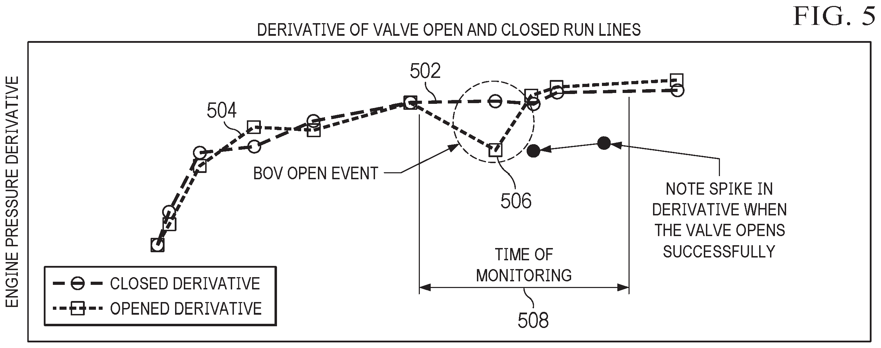

Referring now to FIGURES 4 and 5, there are illustrated a comparison of the engine pressure to engine speed or power for valve open run line 404 and valve closed 402 run line (FIGURE 4) and a derivative of the engine pressure to engine power for valve open run line and valve closed run line (FIGURE 5). The PDot Spike detection method 304 would be used for more robust maneuvers that result in gradual changes of compressor pressures such as during slow decelerations or accelerations. FIGURE 4 illustrates the command of a BOV 102 to open at 406. The BOV open event then occurs at 400. In the situation where the BOV 102 opens, the line 404 indicates a drop in engine compressor pressure. For a valve that is stuck and does not open the engine compressor pressure does not drop.

The PDot Spike detection method 304 is used to detect successful BOV 102 opening or closing by detecting a "spike" in the derivative of compressor pressure. This would apply for both fully open/fully closed BOVs 102 and modulating BOVs. The compressor pressures and their respective derivatives are measured throughout the engine 104 operation. The derivative of the engine pressures in FIGURE 5 illustrates the derivative pressures for a BOV 102 that is not opening is expected at 502 and a pressure for a BOV that does open as expected at 504. The opening of the BOV 102 is indicated by the spike in pressure shown generally at 506. By monitoring the change in pressure (i.e., PDot), when the PDot spike 506 is detected, this indicates a successful BOV 102 operation. The PDot spike detection method 304 will utilize a specified time range 508 for monitoring PDot spikes 506 after the EEC 106 commands a position change of the BOV 102.

For example, if the pressure is measured within the compressor gas path and the BOV 102 open successfully, the compressor pressure derivative will be larger in magnitude than if the BOV 102 remained close. In cases where the BOV 102 is in the incorrect position, the expected change in PDot will not be observed and necessary measures to correct the malfunction may be taken. The rate of change (derivatives) of pressure with respect to other parameters such as time, shaft power, thrust, etc. instead of shaft speed may also be monitored as a means for detecting BOV malfunctions.

Although FIGURE 4 illustrates one example of a comparison of the engine pressure to engine power for valve open run line 404 and valve closed 402 run line, and FIGURE 5 illustrates one example of a derivative of the engine pressure to engine power for valve open run line and valve closed run line, various changes may be made to FIGURES 4 and 5. For example, various components, functions, and/or data in FIGURES 4 and 5 may be combined, further subdivided, replicated, rearranged, or omitted according to particular needs. Also, one or more additional components, functions, and/or data may be included if needed or desired.

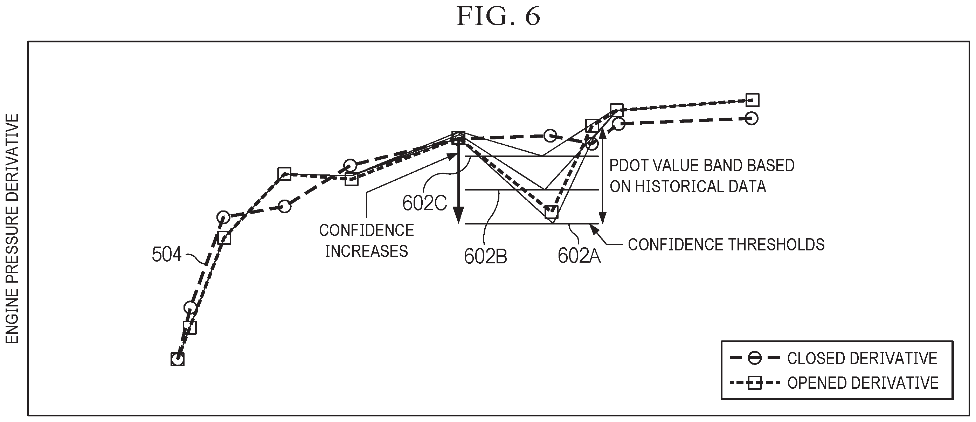

Once a spike in PDot is detected it can then be compared to an expected value of the compressor pressure derivatives to classify confidence in a BOV malfunction/restoration. Referring now to FIGURE 6, there is illustrated the manner in which a confidence vote may be utilized with respect to the PDot spike detection method 304. When the PDot spike 504 occurs, its magnitude is recorded and compared with predetermined confidence thresholds 602 from historical data to calculate a difference. Thus, each of the dashed lines in FIGURE 6 illustrates various historical data for a typical PDot curve for a given maneuver. Depending on the difference between the confidence thresholds 602 and the recorded PDot spike 504, the PDot spike 504 will be categorized based on a confidence threshold where the BOV 102 positional changes have occurred. FIGURE 6 illustrates multiple confidence thresholds 602A, 602B and 602C. The higher the confidence threshold 602 value, the more likely the BOV 102 malfunction has been detected. Generally, larger spikes associated with threshold 602A indicate a higher confidence that the BOV 102 has changed position while smaller spikes associated with a smaller threshold 602C provide less confidence.

Although FIGURE 6 illustrates one example of the manner in which a confidence vote may be utilized with respect to the PDot spike detection method 304, various changes may be made to FIGURE 6. For example, various components, functions, and/or data in FIGURE 6 may be combined, further subdivided, replicated, rearranged, or omitted according to particular needs. Also, one or more additional components, functions, and/or data may be included if needed or desired.

Referring now to FIGURE 7, there is illustrated the pressure versus engine shaft speed for theoretical maneuvers. Line 702 shows a fast maneuver where the pressure rate of change is very high. The Pressure vs. N* Prediction Model 306 is used for fast maneuvers where PDot is rapidly changing, making it difficult to detect spikes due to a BOV positional change. Line 704 shows a slow maneuver where the pressure rate of change is more gradual. The BOV 102 is being commanded to change position as indicated generally by the circles 705. Dashed line 706 and dashed line 708 are examples of maneuvers where the BOV 102 does not respond to commanded changes in position. Lines 702 and 704 are examples of maneuvers where the BOV 102 does respond to a command change in position.

During a fast maneuver, the overall PDot becomes so large that it is difficult to detect the PDot spike associated with a BOV 102 positional change. In cases where the PDot value is rapidly changing or there is insufficient data, it would be difficult to differentiate the expected change in pressure due to a BOV 102 positional change from a fast maneuver. In this case, instead of using a spike in the pressure derivative as an indicator, a lookup table 110 (FIGURE 1) composed from collected data curves may be used for determining a change in positional state of the BOV 102. By referencing the lookup table 110 of expected pressure versus speed curves for given conditions, the BOV 102 position may be determined based on historical valve open or historical valve closed data. The logic utilizes a specified time range for monitoring pressure drops after the EEC 106 commands a position change of the BOV 102 and PDot has decreased which signals the end of a fast maneuver.

While the Pressure vs. N* Prediction Model 306 is implemented with respect to compressor pressure, the same process could be achieved by monitoring other normalized pressure values and/or direct pressure measurements originating from anywhere in the gas path of the engine 104 and/or in line with the bleed system. Additionally, the process could monitor the pressure change with respect to other parameters such as time, shaft horsepower, thrust, etc. instead of engine shaft speed.

Although FIGURE 7 illustrates one example of the pressure versus engine shaft speed to theoretical maneuvers, various changes may be made to FIGURE 7. For example, various components, functions, and/or data in FIGURE 7 may be combined, further subdivided, replicated, rearranged, or omitted according to particular needs. Also, one or more additional components, functions, and/or data may be included if needed or desired.

Referring now to FIGURE 8, there is illustrated a historical curve 802 from the model and the curve 804 of a fast maneuver of the aircraft engine 104. The BOV 102 is being commanded to change position as indicated generally at 806 the time range where the comparison between curves should occur as indicated at 808 once the engine school speed roughly stabilizes.

Once the BOV 102 is commanded to change position, the pressure versus engine shaft speed curve should shift up or shift down and show a difference in pressure between the curve prior to the command and after the command. This provides a successful indication of BOV operation. This is indicated in FIGURE 8 where the curve 804 shifts in a similar manner with respect to the curve 802. Since the Pressure vs. N* Prediction Model 306 compares against curves constructed from historical data, the comparison between the current curve 804 and expected curve 802 can be utilized to construct a confidence vote. This comparison is used to construct a confidence vote that occurs over a longer period (in comparison to the PDot spike method) to gain confidence. Comparison is initiated from when N*Dot roughly stabilizes after the BOV 102 command. Any detection prior to a stabilized N*Dot has a lower confidence since the maneuver is so rapid.

Although FIGURE 8 illustrates one example of a historical curve 802 from the model and the curve 804 of a fast maneuver of the aircraft engine 104, various changes may be made to FIGURE 8. For example, various components, functions, and/or data in FIGURE 8 may be combined, further subdivided, replicated, rearranged, or omitted according to particular needs. Also, one or more additional components, functions, and/or data may be included if needed or desired.

Referring now to FIGURES 9 and 10, there is illustrated an N*response to bleed off valve position change at low power and N*response to bleed off valve position change at high power with respect to the N* vs. Time Response Model comparison method. The N* vs. Time Response Model comparison method accounts for the detection of a BOV 102 malfunction while the engine is in steady-state operation. To employ the N* vs. Time Response Model the following must be true:
1. No changes in fuel flow or TLA are commanded.
2. No acceleration or deceleration flag is set.
3. N*REF (N* Reference) has not changed.
4. Ambient pressure is constant.

It will be appreciated that the above list is not limited and may include other indicators of steady-state behavior.

The N* vs. Time Response Model comparison method utilizes the same principles as the Pressure vs. N* Prediction Model. However, it will compare against tables 110 of historical data of engine shaft speed versus time traces at the time when BOV's open/close such as those illustrated in FIGURES 9 and 10. The N* vs. Time Response Model comparison method uses a confidence voting system identical to that of the confidence vote described with respect to the Pressure vs. N* Prediction Model described with respect to FIGURE 8 except that the comparative data will be slightly different.

The foregoing description describes a scenario where the BOVs 102 are commanded to open/closed in transient conditions while they are not commanded to open/close in steady-state conditions. It is important to realize that the below noted scenarios can also be encountered and hence the technology described hereinabove is applicable to these in a similar manner. First, the BOV's 102 can be uncommanded in transient conditions while commanded to open/close in steady-state conditions. Additionally, the BOV's can be commanded to open/close in both transient and steady-state conditions.

Although FIGURES 9 and 10 illustrate one example of an N*response to bleed off valve position change at low power and N*response to bleed off valve position change at high power with respect to the N* vs. Time Response Model comparison method, various changes may be made to FIGURES 9 and 10. For example, various components, functions, and/or data in FIGURES 9 and 10 may be combined, further subdivided, replicated, rearranged, or omitted according to particular needs. Also, one or more additional components, functions, and/or data may be included if needed or desired.

It may be advantageous to set forth definitions of certain words and phrases used throughout this patent document. The term "couple" and its derivatives refer to any direct or indirect communication between two or more components, whether or not those components are in physical contact with one another. The terms "include" and "comprise," as well as derivatives thereof, mean inclusion without limitation. The term "or" is inclusive, meaning and/or. The phrase "associated with," as well as derivatives thereof, may mean to include, be included within, interconnect with, contain, be contained within, connect to or with, couple to or with, be communicable with, cooperate with, interleave, juxtapose, be proximate to, be bound to or with, have, have a property of, have a relationship to or with, or the like. The phrase "at least one of," when used with a list of items, means that different combinations of one or more of the listed items may be used, and only one item in the list may be needed. For example, "at least one of: A, B, and C" includes any of the following combinations: A, B, C, A and B, A and C, B and C, and A and B and C.

The description in the present disclosure should not be read as implying that any particular element, step, or function is an essential or critical element that must be included in the claim scope. The scope of patented subject matter is defined only by the allowed claims. Moreover, none of the claims invokes 35 U.S.C. § 112(f) with respect to any of the appended claims or claim elements unless the exact words "means for" or "step for" are explicitly used in the particular claim, followed by a participle phrase identifying a function. Use of terms such as (but not limited to) "mechanism," "module," "device," "unit," "component" , "element," "member," "apparatus," "machine," "system," "processor," or "controller" within a claim is understood and intended to refer to structures known to those skilled in the relevant art, as further modified or enhanced by the features of the claims themselves, and is not intended to invoke 35 U.S.C. § 112(f).

While this disclosure has described certain embodiments and generally associated methods, alterations and permutations of these embodiments and methods will be apparent to those skilled in the art. Accordingly, the above description of example embodiments does not define or constrain this disclosure. Other changes, substitutions, and alterations are also possible without departing from the spirit and scope of this disclosure, as defined by the following claims.

## Claims

1. A system comprising:
a bleed off valve (102) associated with an engine (104);
a controller (106) connected to the bleed off valve (102), the controller (106) configured to:
determine if the engine (104) is operating in a steady state condition or a transient condition;
if the engine (104) is operating in the transient condition, determine whether the bleed off valve (102) is malfunctioning based on a first plurality of models;
if the engine (104) is operating in the steady state condition, determine whether the bleed off valve (102) is malfunctioning based on a second plurality of models; and
respond to a determination that the bleed off valve (102) is malfunctioning.

2. The system of Claim 1, wherein if the engine (104) is operating in the transient condition the controller (106) is further configured to:
determine a maneuver type being performed by the engine (104);
select a model of the first plurality of models for analyzing the bleed off valve (102) responsive to the determined maneuver type being performed by the engine (104); and
determine whether the bleed off valve (102) is malfunctioning based on the selected model of the first plurality of models,
optionally, wherein if the engine (104) is operating in the transient condition the controller (106) is further configured to:
determine a first maneuver type is being performed by the engine (104);
monitor a pressure derivative of the engine (104) performing the maneuver type;
compare the monitored pressure derivative to historical data from a look-up table (110); and
determine whether the bleed off valve (102) is malfunctioning based on the comparison between the monitored pressure derivative and the historical data.

3. The system of Claim 1, wherein if the engine (104) is operating in the transient condition the controller (106) is further configured to:
determine a maneuver type being performed by the engine (104);
select a hybrid method for analyzing the bleed off valve (102) responsive to the determined maneuver type being performed by the engine (104), the hybrid method including at least a first model and a second model of the first plurality of models; and
determine whether the bleed off valve (102) is malfunctioning based on the selected hybrid method.

4. The system of Claim 1, wherein if the engine (104) is operating in the transient condition the controller (106) is further configured to:
determine a maneuver type being performed by the engine (104);
select a hybrid method for analyzing the bleed off valve (102) responsive to the determined maneuver type being performed by the engine (104), the hybrid method including at least a first model and a second model of the first plurality of models;
monitor a pressure derivative of the engine (104) performing the maneuver type;
compare the monitored pressure derivative to a first group of historical data from a look-up table (110);
generate a first determination of whether the bleed off valve (102) is malfunctioning based on a comparison between the monitored pressure derivative and the first group of historical data;
generate a second determination of whether the bleed off valve (102) is malfunctioning based on the comparison between a monitored pressure versus time curve and a second group of historical data; and
determine whether the bleed off valve (102) is malfunctioning based on the first determination and the second determination,
optionally, wherein if the engine (104) is operating in the transient condition the controller (106) is further configured to perform a confidence vote to determine an accuracy of the first determination and the second determination to determine whether the bleed off valve (102) is malfunctioning.

5. The system of any preceding Claim, wherein if the engine (104) is operating in the steady state condition the controller (106) is further configured to:
select a hybrid method for analyzing the bleed off valve (102), the hybrid method including at least a first model and a second model of the second plurality of models;
determine whether the bleed off valve (120) is malfunctioning based on the selected hybrid method to generate a first determination responsive thereto;
select a third model of the second plurality of models for analyzing the bleed off valve (102);
determine whether the bleed off valve (102) is malfunctioning based on the selected third model of the second plurality of models to generate a second determination responsive thereto; and
determine whether the bleed off valve (102) is malfunctioning based on the first determination and the second determination,
optionally wherein either:
if the engine (104) is operating in the steady state condition the controller is further configured to perform a confidence vote to determine an accuracy of the first determination and the second determination to determine whether the bleed off valve (102) is malfunctioning; or
if the engine (104) is operating in the steady state condition the controller (106) is further configured to generate the second determination of whether the bleed off valve (102) is malfunctioning based on a comparison between engine speed versus time traces of when the bleed off valve (102) changes state and a first group of historical data of engine speed versus time traces.

6. A method comprising:
determining if an engine (104) is operating in a steady state condition or a transient condition using a controller (106) associated with a bleed off valve (102);
if the engine (104) is operating in the transient condition, determining whether the bleed off valve (102) is malfunctioning based on a first plurality of models;
if the engine (104) is operating in the steady state condition, determining whether the bleed off valve (102) is malfunctioning based on a second plurality of models; and
responding to a determination that the bleed off valve (102) is malfunctioning.

7. The method of Claim 6, wherein the step of determining if the engine (104) is in the transient condition further comprises:
determining a maneuver type being performed by the engine (104);
selecting a model of the first plurality of models for analyzing the bleed off valve (102) responsive to the determined maneuver type being performed by the engine (104); and
determining whether the bleed off valve (102) is malfunctioning based on the selected model of the first plurality of models.

8. The method of Claim 7, wherein the step of determining if the engine (104) is in the transient condition further comprises:
determining a first maneuver type is being performed by the engine (104);
monitoring a pressure derivative of the engine (104) performing the maneuver type;
comparing the monitored pressure derivative to historical data from a look-up table (110); and
determining whether the bleed off valve (102) is malfunctioning based on the comparison between the monitored pressure derivative and the historical data.

9. The method of Claim 6, wherein the step of determining if the engine (104) is in the transient condition further comprises:
determining a maneuver type being performed by the engine (104);
selecting a hybrid method for analyzing the bleed off valve (102) responsive to the determined maneuver type being performed by the engine (104), the hybrid method including at least a first model and a second model of the first plurality of models; and
determining whether the bleed off valve (102) is malfunctioning based on the selected hybrid method.

10. The method of Claim 6, wherein the step of determining if the engine (104) is in the transient condition further comprises:
determining a maneuver type being performed by the engine (104);
selecting a hybrid method for analyzing the bleed off valve (102) responsive to the determined maneuver type being performed by the engine (104), the hybrid method including at least a first model and a second model of the first plurality of models;
monitoring a pressure derivative of the engine (104) performing the maneuver type; comparing the monitored pressure derivative to a first group of historical data from a look-up table (110);
generating a first determination of whether the bleed off valve (102) is malfunctioning based on a comparison between the monitored pressure derivative and the first group of historical data;
generating a second determination of whether the bleed off valve (102) is malfunctioning based on the comparison between the monitored pressure versus engine shaft speed curve and a second group of historical data; and
determining whether the bleed off valve (102) is malfunctioning based on the first determination and the second determination.

11. The method of Claim 10 further comprising performing a confidence vote to determine an accuracy of the first determination and the second determination to determine whether the bleed off valve (102) is malfunctioning.

12. The method of any of Claims 6 to 11, wherein the step of determining if the engine (104) is in the steady state further comprises:
selecting a hybrid method for analyzing the bleed off valve (102), the hybrid method including at least a first model and a second model of the second plurality of models; and
determining whether the bleed off valve (102) is malfunctioning based on the selected hybrid method to generate a first determination responsive thereto;
selecting a third model of the second plurality of models for analyzing the bleed off valve (102);
determining whether the bleed off valve (102) is malfunctioning based on the selected third model of the second plurality of models to generate a second determination responsive thereto; and
determining whether the bleed off valve (102) is malfunctioning based on the first determination and the second determination.

13. The method of Claim 12, further comprising performing a confidence vote to determine an accuracy of the first determination and the second determination to determine whether the bleed off valve (102) is malfunctioning.

14. The method of Claim 12 or 13 wherein determining whether the bleed off valve (102) is malfunctioning based on the selected third model of the second plurality of models further comprises generating the second determination of whether the bleed off valve (102) is malfunctioning based on a comparison between engine shaft speed versus time traces of when the bleed off valve (102) changes state and a first group of historical data of engine speed versus time traces.

15. A system comprising:
a bleed off valve (102) associated with an engine (104);
a controller (106) connected to the bleed off valve (102), the controller (106) configured to:
determine if the engine (104) is operating in a steady state condition or a transient condition;
if the engine (104) is operating in the transient condition:
determine a maneuver type being performed by the engine (104);
select a hybrid method for analyzing the bleed off valve (102) responsive to a first determined maneuver type being performed by the engine (104), the hybrid method including at least a first model and a second model of a plurality of models;
determine whether the bleed off valve (102) is malfunctioning based on selected hybrid method;
determine a second maneuver type is being performed by the engine (104);
monitor a pressure versus engine shaft speed of the engine performing the second maneuver type;
compare the monitored pressure versus engine shaft speed curve to historical data from a look-up table (110); and
determine whether the bleed off valve (102) is malfunctioning based on the comparison between the monitored pressure versus engine shaft speed curve and the historical data;
determine whether the bleed off valve (102) is malfunctioning;
if the engine (104) is operating in the steady state condition:
select the hybrid method for analyzing the bleed off valve (102), the hybrid method including at least the first model and the second model of the plurality of models;
determine whether the bleed off valve (102) is malfunctioning based on the selected hybrid method to generate a first determination responsive thereto;
select a third model of the plurality of models for analyzing the bleed off valve (102);
determine whether the bleed off valve (102) is malfunctioning based on the selected third model of the plurality of models to generate a second determination responsive thereto; and
determine whether the bleed off valve (102) is malfunctioning based on the first determination and the second determination; and
respond to a determination that the bleed off valve (102) is malfunctioning,
optionally wherein if the engine (104) is operating in the steady state condition the controller (106) is further configured to perform a confidence vote to determine an accuracy of the first determination and the second determination to determine whether the bleed off valve (102) is malfunctioning.
